# EUROPEAN PATENT APPLICATION

(11) **EP 4 819 047 A1**
(43) Date of publication of application: **07.10.2026**
(21) Application number: 24906206.8
(22) Date of filing: 11.12.2024
(51) Int. Cl.: G06T 7/73

(54) **PHOTOGRAMMETRY METHOD AND APPARATUS, DEVICE AND STORAGE MEDIUM**

(30) Priority: 19.12.2023 CN 202311744621
(71) Applicant: Shining 3D Tech Co., Ltd., Hangzhou, Zhejiang 311258 (CN)
(72) Inventor: LI, Zhouqiang, Hangzhou, Zhejiang 311258 (CN); LI, Renju, Hangzhou, Zhejiang 311258 (CN); LIU, Yu, Hangzhou, Zhejiang 311258 (CN); WU, Jun, Hangzhou, Zhejiang 311258 (CN); LIU, Wei, Hangzhou, Zhejiang 311258 (CN)
(74) Representative: Dehns Germany Partnerschaft mbB
(86) International application number: PCT/CN2024/138590
(87) International publication number: WO 2025/130723

(57) **Abstract**

The present invention relates to a photogrammetry method and apparatus, a device and a storage medium. The method comprises: acquiring a plurality of frames of images, wherein the images are obtained by a camera performing image acquisition on an object to be measured, the object having a surface provided with marker points; for the images, performing marker point recognition to obtain corresponding marker point position information, and performing image feature extraction to obtain corresponding image feature information; determining matched marker point pairs corresponding to a matched image pair in the plurality of frames of images based on the marker point position information and image feature information; and determining corresponding depth information and poses corresponding to the images based on the matched marker point pairs.

## Description

### Cross-Reference to Related Application

The present invention claims priority to Chinese Patent Application No. 202311744621.6, filed to the China National Intellectual Property Administration on December 19, 2023 and entitled "Method and Apparatus for Photogrammetry, Device and Storage Medium", the invention of which is incorporated herein by reference in its entirety.

### Technical Field

Embodiments of the present invention relate to the field of computer technologies, and in particular, to a method and apparatus for photogrammetry, a device and a storage medium.

### Background

Photogrammetry refers to a technology for measuring a shape, a size and a spatial position of a target object by using a combination of a camera and a film, and is widely applied in fields such as industry, construction and biology.

Photogrammetry methods involved in the related art involve high costs and relatively low accuracy. Therefore, there is currently an urgent need for a method for photogrammetry having low cost and high accuracy.

### Summary

In order to solve the described technical problems or at least partially solve the described technical problems, the embodiments of the present invention provide a method and apparatus for photogrammetry, a device, and a storage medium.

A first aspect of the embodiments of the present invention provides a method for photogrammetry, including:
a plurality of frames of images are acquired, wherein the images are obtained by a camera performing image acquisition on an object to be measured, the object having a surface provided with marker points;
for the images, marker point recognition is performed to obtain corresponding marker point position information, and image feature extraction is performed to obtain corresponding image feature information;
matched marker point pairs corresponding to matched image pairs in the plurality of frames of images are determined based on the marker point position information and the image feature information;
corresponding depth information and poses corresponding to the images are determined based on the matched marker point pairs.

A second aspect of the embodiments of the present invention provides an apparatus for photogrammetry, including:
a first acquisition module, configured to acquire a plurality of frames of images, wherein the images are obtained by a camera performing image acquisition on an object to be measured, the object having a surface provided with marker points;
a first extraction module, configured to, for the images, perform marker point recognition to obtain corresponding marker point position information, and perform image feature extraction to obtain corresponding image feature information;
a first determination module, configured to determine matched image pairs in the plurality of frames of images and matched marker point pairs corresponding to the matched image pair based on the marker point position information and the image feature information;
a first reconstruction module, configured to determine corresponding depth information and poses corresponding to the images based on the matched marker point pairs.

A third aspect of the embodiments of the present invention provides an electronic device, the server including a processor and a memory, wherein the memory stores a computer program, and when the computer program is executed by the processor, the processor executes the method of the first aspect.

A fourth aspect of the embodiments of the present invention further provides a non-volatile computer-readable storage medium storing a computer program which, when executed by a processor, can implement the method of the first aspect.

Compared with the related art, the technical solutions of the embodiments of the present invention have the following advantages:
in the embodiments of the present invention, the plurality of frames of images can be acquired, wherein the images are obtained by a camera performing image acquisition on an object to be measured, the object having a surface provided with marker points; for the images, marker point recognition can be performed to obtain corresponding marker point position information, and image feature extraction can be performed to obtain corresponding image feature information; matched marker point pairs corresponding to the matched image pairs in the plurality of frames of images can be determined based on the marker point position information and image feature information; and corresponding depth information and poses corresponding to the images can be determined based on the matched marker point pairs. By means of the above solution, it is only necessary to use a camera to perform image acquisition on the object to be measured. Since the cost of the camera is generally relatively low, the cost can be reduced. During the process of marker point matching (or registration), outliers can be filtered by image feature information, thereby making the determined matched marker point pairs more accurate, and helping to improve the accuracy of the depth information and the poses. Hence, the method for photogrammetry of the embodiments of the present invention exhibits the advantages of low cost and high accuracy.

### Brief Description of the Drawings

The accompanying drawings, which are incorporated in the description and constitute a part of the description, illustrate embodiments consistent with the present invention and, together with the description, serve to explain the principles of the present invention.

In order to describe the solutions in the embodiments of the present invention or in the related art more clearly, hereinafter, accompanying drawings requiring to be configured to describe the embodiments or the related art are introduced briefly. Apparently, for a person of ordinary skill in the art, other accompanying drawings can also be obtained according to these accompanying drawings without involving any inventive effort.
Fig. 1 is a flowchart of a method for photogrammetry provided according to some embodiments of the present invention;
Fig. 2 is a flowchart of another method for photogrammetry provided according to some embodiments of the present invention;
Fig. 3 is a flowchart of yet another method for photogrammetry provided according to some embodiments of the present invention;
Fig. 4 is a schematic structural diagram of an apparatus for photogrammetry provided according to some embodiments of the present invention;
Fig. 5 is a schematic structural diagram of an electronic device according to some embodiments of the present invention.

### Detailed Description of the Embodiments

In order to clearly understand the described objects, features and advantages of the present invention, the solutions of the present invention will be further described below. It should be noted that the embodiments in the present invention and the features in the embodiments may be combined with one another without conflicts.

Many details are set forth in the following description in order to provide a thorough understanding of the present invention, but the present invention may also be implemented in other ways different from those described herein; obviously, the embodiments described in the description are only a part rather than all of the embodiments of the present invention.

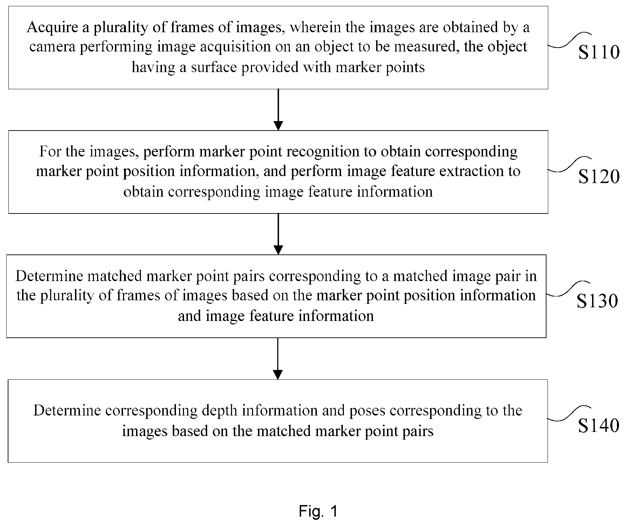

Fig. 1 is a flowchart of a method for photogrammetry provided according to embodiments of the present invention, which method may be executed by an electronic device. The electronic device may be exemplarily understood as a device such as a mobile phone, a tablet computer, a notebook computer, a desktop computer, and a smart television. As shown in Fig. 1, the method provided according to this embodiment includes the following steps:
S110. a plurality of frames of images are acquired, wherein the images are obtained by a camera performing image acquisition on an object to be measured, the object having a surface provided with marker points.

In the embodiments of the present invention, before performing image acquisition on the object to be measured, some marker points may be provided on the surface of the object to be measured, and then a camera is configured to perform image acquisition on the object to be measured, which has the marker points on its surface, from different positions,, to obtain the plurality of frames of images. It should be noted that the camera may be a fixed-focus single-lens reflex camera, or may be a fixed-focus industrial camera, but is not limited thereto.

In some embodiments of the present invention, the marker points may be coded marker points or non-coded marker points, which is not limited herein. It can be understood that each coded marker point generally includes a plurality of points regularly arranged along the same circumference. The plurality of points have relatively small areas, the position information of the entire coded marker point is provided by a center position of a central point, and the presence or absence of points at respective coding positions determines different coding information. In addition, the coded marker points may also be a two-dimensional code, a one-dimensional code, a combination of large points and small points, etc., which is not limited herein. The one-dimensional code and the two-dimensional code may encode and decode information using preset algorithms, and the combination of large points and small points may be implemented using preset rules.

For example, when the coded marker points consist of a combination of large points and small points, the coded marker points may be a type of dot matrix pattern, where the combination of large points and small points is configured to represent different information (for example, a large point represents 1, and a small point represents 0), and information is encoded by the size, position and arrangement of the points. However, in some embodiments of the present invention, a non-coded marker point includes a single point, which has a relatively large area, and there is no coding information between one non-coded marker point and another non-coded marker point, in other words, each non-coded marker point is independent. In this way, compared with providing coded marker points on the surface of the object to be measured, using non-coded marker points on the surface of the object to be measured facilitates shortening the time consumed by providing marker points on the surface of the object to be measured, and reducing labor costs.

It should be noted that, the shape of the non-coded marker points may be set by a person skilled in the art based on actual situations, which is not limited herein. For example, the shape may be a circle, a rectangle, etc., but is not limited thereto. It should further be noted that, the distribution of the non-coded marker points on the surface of the object to be measured may also be set by a person skilled in the art based on actual situations, which is not limited herein. For example, the non-coded marker points of a certain density are pasted in disorder on the surface of the object to be measured, to ensure that each image includes at least four non-coded marker points.

S120. For the images, marker point recognition is performed to obtain corresponding marker point position information, and image feature extraction is performed to obtain corresponding image feature information.

In some embodiments of the present invention, the marker point position information is image coordinates of the marker points in the images to which the marker points belong. It should be noted that any possible marker recognition algorithm may be configured to perform marker recognition on the images, which is not limited herein.

In some embodiments of the present invention, the image feature information is information used to characterize image features, wherein the image features may include a color feature, a texture feature, a shape feature and/or a spatial relationship feature, etc., but is not limited thereto. It should be noted that any possible image feature extraction algorithm may be used to extract image features of the images, which is not limited herein.

S130. Matched marker point pairs corresponding to matched image pairs in the plurality of frames of images are determined based on the marker point position information and the image feature information.

In some embodiments of the present invention, each matched image pair includes two different images, the two different images include an overlapping image region, and the overlapping image region includes the matched marker point pairs.

In some embodiments of the present invention, for two different images, when one image has marker point A (2d marker point) in the overlapping image region, the other image has marker point A' (2d marker point) in the overlapping image region; when the marker point A and the marker point A' satisfy a matching condition based on image feature information of the two frames of images, it is indicated that the two marker points correspond to a same marker point (3d marker point) on the surface of the object to be measured and constitute a matched marker point pair. It should be noted that, the image features of the two frames of images refer to quantitative descriptions that can be extracted from the images and used to represent image attributes, and include grayscale features (such as the grayscale value of the image), texture features (such as roughness and smoothness), color features (such as a color histogram and color moment), shape features (such as edges, corners and contours), spatial relationship features (i.e. the relative positions and distances between different objects or pixel points in the image), etc., or a combination of more features.

In some embodiments of the present invention, the distance features and the grayscale features may be used together to construct the image feature information. In an embodiment, distance information (i.e. the distance features) of each pixel point may be extracted from the two frames of images using a depth sensor or a stereo matching algorithm, and a grayscale value (i.e. the grayscale features) of each pixel point is extracted from the images. 128-dimensional vectors of each marker point A and each marker point A' are constructed, including the distance features and the grayscale features. For example, first 64 dimensions can be used for storing distance features, and last 64 dimensions can be used for storing grayscale features. It is determined whether the two marker points constitute a matched marker point pair based on the constructed 128-dimensional vector of the marker point A and the 128-dimensional vector of the marker point A'.

In some embodiments of the present invention, the image feature information may also be constructed using the distance features. In an embodiment, feature points of the marker point A and the marker point A' may be extracted from the two frames of images using a feature detection algorithm, such as Scale-Invariant Feature Transform (SIFT) or Oriented FAST and Rotated BRIEF (ORB).

Descriptors (vectors used for characterizing feature points in the image) of each feature point are calculated; Euclidean distances between the descriptors are calculated; it is determined whether the two marker points constitute a matched marker point pair based on the Euclidean distance between the descriptors of the two feature points. The content of the matching condition may be set by a person skilled in the art based on actual situations, which is not limited herein. For example, a fundamental matrix (i.e. F) of two frames of images is determined based on the image feature information of the two frames of images. When a PAFPA is less than or equal to a second preset threshold (e.g., 0), wherein PA is marker point position information (i.e. image coordinates) of the marker point A in the image to which the marker point belongs, and PA' is marker point position information (i.e. image coordinates) of the marker point A in the image to which the marker point belongs, the marker point A and the marker point A' form a matched marker point pair.

S140. Corresponding depth information and poses corresponding to the images are determined based on the matched marker point pairs.

In some embodiments of the present invention, the S140 may include: S141. an initial reconstruction image pair is selected from among the matched image pairs.

In some embodiments of the present invention, S141 may include: an initial image is selected from among the plurality of frames of images, wherein a sum of matched marker point pairs corresponding to the initial image is the largest, and the sum of matched marker point pairs corresponding to an image is a sum of the number of matched marker point pairs corresponding to matched image pairs including the image; and the initial reconstruction image pair is selected from among the matched image pairs, wherein the initial reconstruction image pair includes an initial image and a matched image, and the matched image is an image having the largest number of matched marker point pairs with the initial image among images whose frame angle relative to the initial image is greater than a preset angle threshold.

Certainly, in some other embodiments of the present invention, S142 may include: the initial reconstruction image pair is randomly selected from among the matched image pairs.

S142. Triangulation processing is performed based on the matched marker point pairs corresponding to the initial reconstruction image pair to obtain the corresponding depth information.

In some embodiments of the present invention, for matched marker point pairs corresponding to the initial reconstruction image pair, three-dimensional coordinates (i.e., depth information) of marker points provided on the surface of the object to be measured corresponding to the two marker points in a three-dimensional space may be calculated based on marker point position information of the two marker points in the matched marker point pairs.

Certainly, for the initial reconstruction image pair, a pose corresponding to the matched image may be determined based on the three-dimensional coordinates of marker points provided on the surface of the object to be measured (which correspond to the matched marker point pairs) and the marker point position information (i.e. image coordinates) of the marker points located in the matched image in the matched marker point pair.

S143. It is determined that a preset reconstruction stop condition is not satisfied, a next reconstruction image pair is determined and reconstruction processing is performed on the next reconstruction image pair, until the preset reconstruction stop condition is satisfied;
wherein a next reconstruction image pair is determined and reconstruction processing is performed on the next reconstruction image pair, includes: adjacent images corresponding to a previous reconstruction image pair and a next reconstruction image pair including the adjacent images are determined, wherein the adjacent images and the previous reconstruction image pair have the largest number of co-visible marker points; poses corresponding to the adjacent images are determined based on depth information of the co-visible marker points and position information of the co-visible marker points in the adjacent images; and triangulation processing is performed based on the matched marker point pair corresponding to the next reconstruction image pair to obtain corresponding depth information.

In some embodiments of the present invention, the content of the preset reconstruction stop condition may be set by a person skilled in the art based on practical situations, but is not limited herein. For example, the preset reconstruction stop condition may be that triangulation processing has been performed on all matched image pairs corresponding to the plurality of frames of images, or that the number of matched image pairs on which triangulation processing has been performed is greater than a sixth preset threshold, but is not limited thereto.

In some embodiments of the present invention, an image having the largest number of co-visible marker points in the previous reconstruction image pair is selected from among the plurality of frames of images as an adjacent image; and the pose corresponding to the adjacent image may be determined based on the coordinates (i.e., depth information) of the co-visible marker points in the three-dimensional space and the position information (i.e. image coordinates) of the co-visible marker points in the adjacent image.

In some embodiments of the present invention, a process of selecting the next reconstruction image pair may include: from among the matched image pairs that have not been subjected to the triangulation processing and include the adjacent image, a matched image pair having the largest number of the matched marker point pairs is selected as the next reconstruction image pair.

Certainly, in some other embodiments of the present invention, the process of selecting the next reconstruction image pair may also include: from among the matched image pairs that have not been subjected to the triangulation processing and include the adjacent image, a matched image pair is randomly selected as the next reconstruction image pair.

In some embodiments of the present invention, for the matched marker point pairs corresponding to the next reconstruction image pair, three-dimensional coordinates (i.e., depth information) of marker points provided on the surface of the object to be measured corresponding to the two marker points may be calculated based on marker point position information of the two marker points in the matched marker point pair.

Certainly, for the next reconstruction image pair, based on the three-dimensional coordinates of the marker points on the surface of the object to be measured that correspond to the matched marker point pair, and the marker point position information (i.e., image coordinates) of the marker points located in the other image different from the adjacent image in the matched marker point pair, the pose corresponding to the other image (which is different from the adjacent image) may be determined.

It can be understood that, depth information of a marker point is determined based on the triangulation processing and a pose corresponding to the image is determined based on a 3d-2d coordinate relationship of the marker point, enabling the method for determining the depth information and the pose to be easy, and facilitating reducing implementation difficulty.

In some embodiments of the present invention, the method further includes: the depth information, the poses, and camera intrinsic parameters are optimized.

In some embodiments of the present invention, the initial camera intrinsic parameters may be calculated in any possible manner. For example, when the camera is a single-lens reflex camera, initial camera intrinsic parameters may be estimated by Exchangeable Image File Format (EXIF) information; and when the camera is an industrial camera, the initial camera intrinsic parameters may be calculated based on camera lens information.

In some embodiments of the present invention, the timing for optimization may be set by a person skilled in the art based on actual situations, which is not limited herein. For example, optimization may be performed after determining the poses corresponding to all the images, or optimization may be performed each time after determining the poses corresponding to the predetermined number of images, or errors corresponding to depth information, poses, and camera intrinsic parameters may be calculated in real time, and optimization is triggered when the error is greater than a first preset error threshold, but is not limited thereto.

It should be noted that any possible optimization manner, such as Bundle Adjustment (BA), may be used for optimization, which is not limited herein.

It can be understood that, the optimization of the depth information, the poses and the camera intrinsic parameters may enable the described parameters to be more accurate, facilitating improving the accuracy of photogrammetry.

According to the embodiments of the present invention, it is only necessary to use a single camera to perform image acquisition on the object to be measured, thereby being beneficial to reducing costs. In the process of the marker point matching (or registration), outliers can be filtered by image feature information, such that the determined matched marker point pairs are more accurate, thereby helping to improve the accuracy of the depth information and the poses. Hence, the photogrammetry method of the embodiments of the present invention exhibits the advantages of low costs and high accuracy.

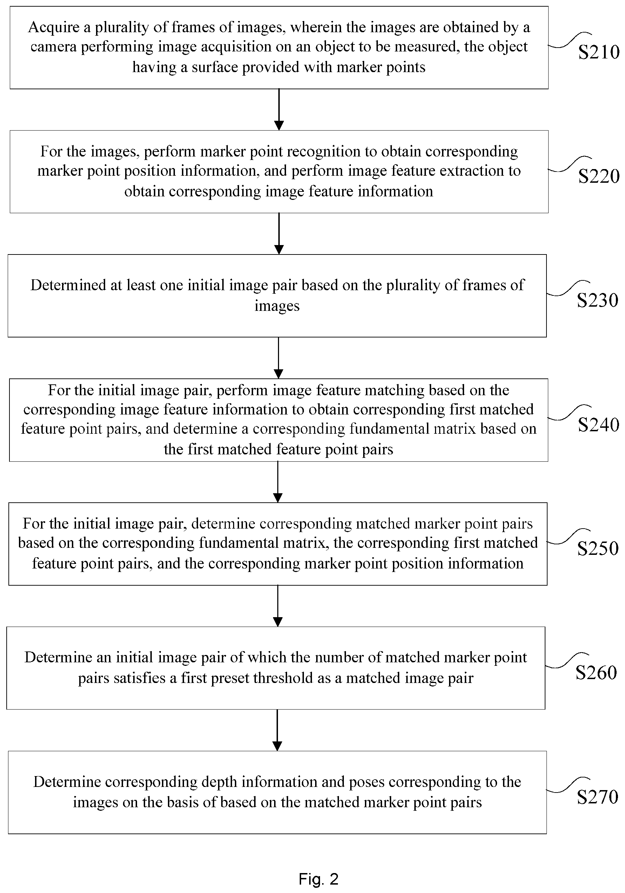

Fig. 2 is a schematic flowchart of another method for photogrammetry provided according to embodiments of the present invention. The embodiments of the present invention are optimized based on the described embodiments, and the embodiments of the present invention can be combined with various optional solutions in the described at least one embodiment.

As shown in Fig. 2, the method for photogrammetry may include the following steps.

S210. A plurality of frames of images are acquired, wherein the images are obtained by a camera performing image acquisition on a measured object, the object having a surface provided with marker points.

In some embodiments of the present invention, the S210 is similar to the S110, and is not further described herein.

S220. For the images, marker point recognition is performed to obtain corresponding marker point position information, and image feature extraction is performed to obtain corresponding image feature information.

In some embodiments of the present invention, the S220 is similar to the S120, and is not further described herein.

S230. At least one initial image pair is determined based on the plurality of frames of images.

In some embodiments of the present invention, the S230 may include: for the plurality of frames of images, one initial image pair is formed from every two frames of images.

Exemplarily, when the number of plurality of frames of images is N, then two frames of images form an initial image pair, to obtain C_N^2 initial image pairs.

Certainly, in some embodiments of the present invention, the S230 may further include: forming initial image pairs based on the plurality of frames of images according to the principle that two frames of images whose frame distance is less than or equal to a seventh preset threshold (e.g., 10) may form one initial image pair.

S240. For the initial image pair, image feature matching is performed based on the corresponding image feature information to obtain corresponding first matched feature point pairs, and a corresponding fundamental matrix is determined based on the corresponding first matched feature point pairs.

In some embodiments of the present invention, the first matched feature point pairs include two mutually matched feature points from different images.

It should be noted that any possible image feature matching algorithm may be used to perform image feature matching on the initial image pair, which is not limited herein.

Certainly, a scene graph (i.e., Graph) corresponding to the initial image pairs corresponding to the plurality of frames of images may also be drawn based on the first matched feature point pairs corresponding to the initial image pairs, wherein the scene graph includes nodes and edges, a node is configured to represent an image, and an edge is configured to represent two frames of images connected thereto forming an initial image pair, and the edge may further carry the first matched feature point pairs corresponding to the initial image pair connected thereto. In this way, it is possible to clearly illustrate which two frames of images among the plurality of frames of images form an initial image pair and the first matched feature point pairs between the initial image pairs.

In some embodiments of the present invention, the fundamental matrix (i.e., F) constrains the relationship of the 3d points in an image coordinate system of the two cameras. When a same 3d point is imaged into 2d point B and 2d point B' respectively in two different images, then PBFPB'=0, wherein PB is an image coordinate of 2d point B in an image to which the 2d point B belongs, and PB' is an image coordinate of 2d point B' in an image to which the 2d point B' belongs. The first matched feature point pair is an imaging result of the same 3d point in two different images obtained by means of image feature matching, and therefore, a fundamental matrix may be determined based on the first matched feature point pair.

It should be noted that any possible algorithm, such as an eight-point algorithm, may be used to calculate the fundamental matrix corresponding to the initial image pair, which is not limited herein.

S250. For the initial image pair, corresponding matched marker point pairs are determined based on the corresponding fundamental matrix, the corresponding first matched feature point pairs, and the corresponding marker point position information.

In some embodiments of the present invention, the S250 may include: for the initial image pair, a corresponding initial marker point pair is determined based on the first matched feature point pair and the marker point position information, and when a product of position information of an initial marker point pair and the fundamental matrix is less than or equal to a second preset threshold, it is determined that the initial marker point pair is a matched marker point pair.

In some embodiments of the present invention, for the initial image pair, the first matched feature point pair corresponding thereto includes position information (i.e. image coordinates) of two feature points matched with each other. When two pieces of marker point position information (i.e. image coordinates) from the initial image pair located in different images overlaps with the position information of the first matched feature point pair, or the deviation is less than a first preset deviation threshold, the two marker points (2d marker points) corresponding to the two pieces of marker point position information form an initial marker point pair.

In some embodiments of the present invention, initial marker point pairs are verified based on the fundamental matrix, and the initial marker point pairs that pass the verification are the matched marker point pairs.

It should be noted that a value of the second preset threshold may be set by a person skilled in the art based on actual situations, which is not limited herein. For example, the second preset threshold is 0, the initial marker point pair includes marker point A and marker point A'; when PAFPA=0, wherein PA is the marker point position information (i.e., image coordinates) of marker point A in the image to which marker point belongs, and PA' is the marker point position information (i.e. image coordinates) of the marker point A in the image to which the marker point belongs, then the initial marker point pair passes the verification and may be determined to be a matched marker point pair.

It can be understood that, the initial marker point pairs are verified using the fundamental matrix, so that the finally obtained matched marker point pairs can be more accurate, facilitating improving the accuracy of photogrammetry.

Certainly, in some other embodiments of the present invention, the initial marker point pairs may not be verified using the fundamental matrix, but each initial marker point pair is determined as the matched marker point pair.

S260. An initial image pair of which the number of matched marker point pairs satisfies a first preset threshold is determined as a matched image pair.

It should be noted that, a value of the first preset threshold may be set by a person skilled in the art based on actual situations, which is not limited herein.

Certainly, edges corresponding to the initial images that do not belong to the matched image pairs in the scene graph may also be deleted, retaining edges corresponding to the matched image pairs.

S270. Corresponding depth information and poses corresponding to the images are determined based on the matched marker point pairs.

In some embodiments of the present invention, the S270 is similar to the S140, and is not further described herein.

According to embodiments of the present invention, image feature matching can be performed on corresponding image feature information based on the initial images to obtain corresponding first matched feature point pairs, and a corresponding fundamental matrix and initial marker point pairs are determined based on the corresponding first matched feature point pairs. Furthermore, the initial marker point pairs are verified based on the fundamental matrix, and unreliable initial marker point pairs are filtered out, leaving the more reliable matched marker pairs. This results in higher accuracy of the final matched marker pairs, which is beneficial for improving the accuracy of the depth information and the poses, and thus improving the accuracy of photogrammetry.

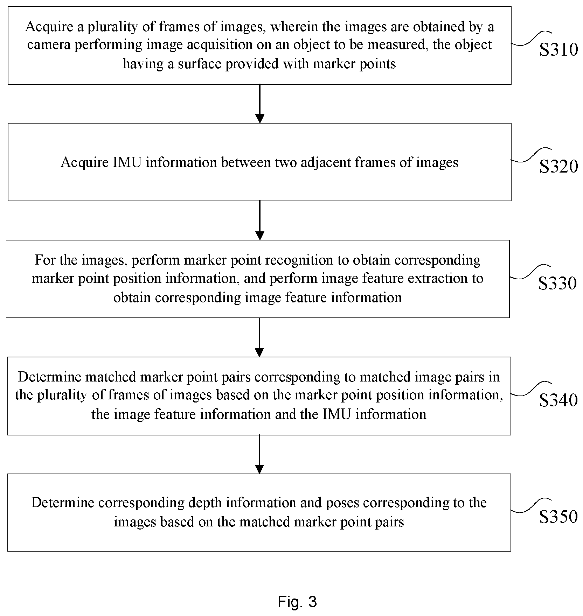

Fig. 3 is a schematic flowchart of another method for photogrammetry provided according to embodiments of the present invention. The embodiments of the present invention are optimized based on the described embodiments, and the embodiments of the present invention can be combined with various optional solutions in the described at least one embodiment.

As shown in Fig. 3, the method for photogrammetry may include the following steps.

S310. A plurality of frames of images are acquired, wherein the images are obtained by a camera performing image acquisition on a measured object, the object having a surface provided with marker points.

In some embodiments of the present invention, the S310 is similar to the S110, and is not further described herein.

S320. Inertial Measurement Unit (IMU) information between two adjacent frames of images is acquired.

In the embodiments of the present invention, in the process of performing image acquisition on the object to be measured, an IMU measuring unit may be configured to detect the IMU information of the camera in real time, to acquire the IMU information between adjacent images. It should be noted that, the measurement frame rate of the IMU measuring unit is greater than the acquisition frame rate of the camera for image acquisition, which is not limited herein.

In some embodiments of the present invention, the IMU information may include, but is not limited to, velocity, acceleration, angular velocity, angular acceleration, etc.

S330. For the images, marker point recognition is performed to obtain corresponding marker point position information, and image feature extraction is performed to obtain corresponding image feature information.

In some embodiments of the present invention, the S330 is similar to the S120, and is not further described herein.

S340. Matched marker point pairs corresponding to the matched image pairs in the plurality of frames of images are determined based on the marker point position information, the image feature information, and the IMU information.

In some embodiments of the present invention, the S340 may include: S341. for the plurality of frames of images, two frames of images whose inter-frame relative position satisfies a preset condition form a matched image pair.

In some embodiments of the present invention, the content of the preset condition may be set by a person skilled in the art based on actual situations, but is not limited herein. For example, the matched image pairs are formed based on the plurality of frames of images according to the principle that one image may form a matched image pair with a preset number of images after and/or before the acquisition time. Alternatively, the matched image pairs are formed based on the plurality of frames of images according to the principle that one matched image pair may be formed by two frames of images between which the frame distance is less than or equal to a seventh preset threshold, such as 10. However, it is not limited thereto.

S342. For the matched image pair, image feature matching is performed based on the corresponding image feature information to obtain corresponding first matched feature point pairs.

Certainly, a scene graph (i.e., Graph) corresponding to the matched image pairs corresponding to the plurality of frames of images may also be drawn based on the first matched feature point pairs corresponding to each matched image pair, wherein the scene graph includes nodes and edges, a node is configured to represent an image, and an edge is configured to represent two frames of images connected thereto forming a matched image pair, and the edge may further carry the first matched feature point pair corresponding to the matched image pair connected thereto. In this way, it is possible to clearly illustrate which two frames of images among the plurality of frames of images form a matched image pair and first matched feature point pairs between the matched image pairs.

Certainly, for two matched image pairs, it is determined that one matched image pair includes an image M and an image N, and the other matched image pair includes an image N and an image P; when the number of first matched feature point pairs corresponding to the image M and the image N is greater than an eighth preset threshold, and the number of first matched feature point pairs corresponding to the image N and the image P is greater than the eighth preset threshold, then the image M and the image P may form a new matched image pair, and its corresponding matched marker point pair is determined.

S343. For the matched image pair, when the number of corresponding first matched feature point pairs is greater than a third preset threshold, a motion direction between two frames of images in the matched image pair is determined based on the corresponding IMU information, and corresponding second matched feature point pairs are determined based on the motion direction, and when the number of second matched feature point pairs is greater than a fourth preset threshold, a corresponding fundamental matrix is determined based on the second matched feature point pairs, and corresponding matched marker point pairs are determined based on the corresponding fundamental matrix, the corresponding second matched feature point pairs, and the corresponding marker point position information.

It should be noted that, a value of the third preset threshold may be set by a person skilled in the art based on actual situations, which is not limited herein.

In some embodiments of the present invention, each matched image pair includes two frames of images, and between the acquisition times of the two frames of images, the IMU information measured by the IMU measuring unit is the IMU information corresponding to the matched image pair.

In some embodiments of the present invention, the motion direction may be represented by a rotation matrix R and a translation matrix T. For a matched image pair, the pose corresponding to an image is recorded as a first pose, and the pose corresponding to the other image is recorded as a second pose; and the second pose is transformed based on the rotation matrix R and the translation matrix T to obtain the first pose.

In some embodiments of the present invention, for a matched image pair, the two frames of images in the matched image pair may be transformed to a same image coordinate system based on the motion direction, and after the two frames of images are transformed to the same image coordinate system, two feature points, of which position information (i.e. image coordinates) in the two frames of images are the same or have a deviation less than a second preset deviation threshold, constitute a second matched feature point pair.

It should be noted that, a value of the fourth preset threshold may be set by a person skilled in the art based on actual situations, which is not limited herein.

It should also be noted that any possible algorithm, such as an eight-point algorithm, may be used to calculate the fundamental matrix corresponding to the matched image pair, which is not limited herein.

In some embodiments of the present invention, the corresponding matched marker point pairs are determined based on the corresponding fundamental matrix, the corresponding second matched feature point pairs, and the corresponding marker point position information, may include: for the matched image pair, a corresponding initial marker point pair is determined based on the second matched feature point pair and the marker point position information, and when a product of position information of an initial marker point pair and the fundamental matrix is less than or equal to a second preset threshold, it is determined that the initial marker point pair is the matched marker point pair.

In some embodiments of the present invention, for the matched image pair, the second matched feature point pair corresponding thereto includes position information (i.e. image coordinates) of two feature points matched with each other. When two pieces of marker point position information (i.e., image coordinates) from the matched image pair located in different images overlap with the position information of the second matched feature point pair, or the deviation is less than a first preset deviation threshold, the two marker points (2d marker points) corresponding to the two pieces of marker point position information form an initial marker point pair.

In some embodiments of the present invention, the initial marker point pairs are verified based on the fundamental matrix, and the initial marker point pairs that pass the verification are the matched marker point pairs.

It should be noted that, a value of the second preset threshold may be set by a person skilled in the art based on actual situations, which is not limited herein. For example, the second preset threshold is 0, an initial marker point pair includes marker point A and marker point A'; when PAFPA=0, wherein PA is the marker point position information (i.e. image coordinates) of the marker point A in the image to which the marker point A belongs, and PA' is the marker point position information (i.e. image coordinates) of the marker point A in the image to which the marker point A belongs, then the initial marker point pair passes the verification and may be determined to be the matched marker point pair.

It can be understood that, the initial marker point pairs are verified using the fundamental matrix, so that the finally obtained matched marker point pairs can be more accurate, facilitating improving the photogrammetry accuracy.

In some embodiments of the present invention, the S340 can further include: S344. for the matched image pair, when the number of the second matched feature point pairs is smaller than or equal to the fourth preset threshold, corresponding initial marker point pairs are determined based on the second matched feature point pair and the marker point position information, and the initial marker point pairs are used as the matched marker point pairs.

In some embodiments of the present invention, the S340 can further include: S345. for the matched image pair, when the number of the first matched feature point pairs is less than or equal to the third preset threshold, a motion direction between two frames of images in the matched image pair is determined based on the corresponding IMU information, and the corresponding matched marker point pairs are determined based on the motion direction and the marker point position information.

In some embodiments of the present invention, for the matched image pair, the two frames of images in the matched image pair may be transformed to a same image coordinate system based on the motion direction, and after the two frames of images are transformed to the same image coordinate system, two marker points (2d marker points) in the two frames of images of which the marker points position information (i.e., image coordinates) is the same or the deviation is less than a third preset deviation threshold, constitute a matched marker point pair.

It can be understood that, the corresponding motion direction is determined based on the IMU information corresponding to the matched image pairs, and the determination of the matched marker points based on the motion direction can make it still possible to determine the matched marker point pairs corresponding to the matched image pairs when the surface features of the object to be measured are unclear or difficult to identify, thereby improving the stability and robustness of photogrammetry.

Certainly, in some other embodiments of the present invention, the S340 may also include: the marker point position information, the image feature information and the IMU information are inputted into a trained network model, and the matched marker point pairs corresponding to the matched image pairs output by the network model is acquired.

S350. Corresponding depth information and poses corresponding to the images are determined based on the matched marker point pairs.

In some embodiments of the present invention, the S350 is similar to the S140, and is not further described herein.

According to embodiments of the present invention, the matched marker point pairs corresponding to the matched image pairs in the plurality of frames of images can be determined based on the marker point position information, the image feature information and the IMU information. This allows for more comprehensive and numerous factors to be considered during determining the matched marker pairs, which helps to improve the accuracy of the matched marker pairs and thus improve the accuracy of photogrammetry.

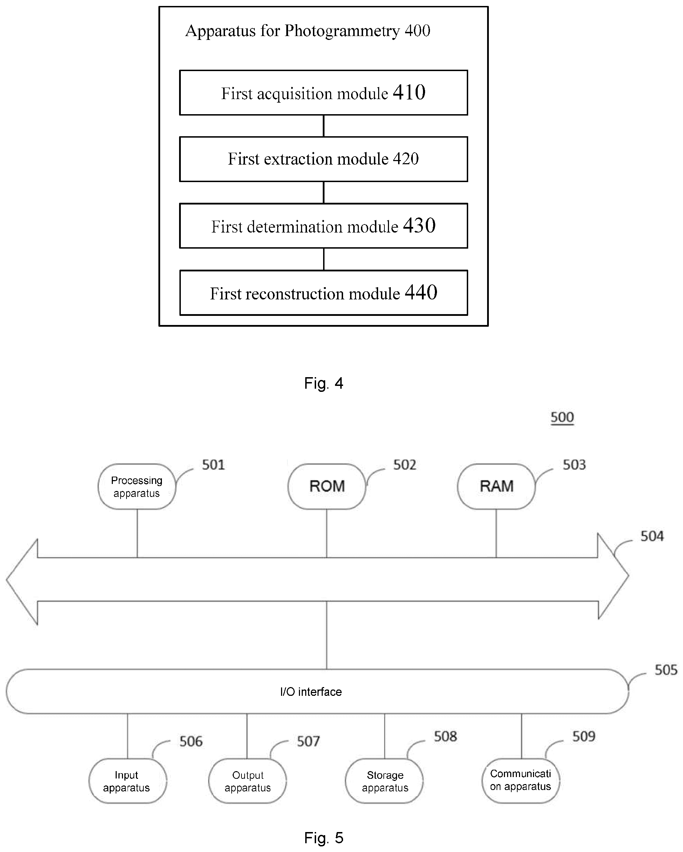

Fig. 4 is a schematic structural diagram of an apparatus for photogrammetry provided according to embodiments of the present invention. The apparatus for photogrammetry may be understood as the foregoing electronic device or a part of functional modules in the foregoing electronic device. As shown in Fig. 4, the photogrammetry apparatus 400 includes:
a first acquisition module 410 is configured to acquire a plurality of frames of images, wherein the images are obtained by a camera performing image acquisition on an object to be measured, the object having a surface provided with marker points;
a first extraction module 420 is configured to, for the images, perform marker point recognition to obtain corresponding marker point position information, and perform image feature extraction to obtain corresponding image feature information;
a first determination module 430 is configured to determine matched marker point pairs corresponding to matched image pairs based on the marker point position information and the image feature information;
a first reconstruction module 440 is configured to determine corresponding depth information and poses corresponding to the images based on the matched marker point pairs.

In some other embodiments of the present invention, the first determination module 430 may include:
a first determination sub-module is configured to determine at least one initial image pair based on the plurality of frames of images;
a second determination sub-module is configured to, for the initial image pair, perform image feature matching based on the corresponding image feature information to obtain corresponding first matched feature point pairs, and determine a corresponding fundamental matrix based on the first matched feature point pairs;
a third determination sub-module is configured to, for the initial image pair, determine the corresponding matched marker point pairs based on the corresponding fundamental matrix, the corresponding first matched feature point pair, and the corresponding marker point position information; and
a fourth determination sub-module is configured to determine an initial image pair of which the number of matched marker point pairs satisfies a first preset threshold as a matched image pair.

In some embodiments of the present invention, the first determination sub-module is configured to, for the plurality of frames of images, form one initial image pair from every two frames of images.

In some embodiments of the present invention, the third determination sub-module is configured to determine, for the initial image pair, corresponding initial marker point pairs based on the first matched feature point pairs and the marker point position information, and when a product of position information of an initial marker point pair and the fundamental matrix is less than or equal to a second preset threshold, determine that the initial marker point pair is a matched marker point pair.

In some still other embodiments of the present invention, the apparatus further includes:
a second acquisition module is configured to acquire IMU information between two adjacent frames of images;
wherein the first determination module 430 may include: a fifth determination sub-module is configured to determine matched marker point pairs corresponding to matched image pairs in the plurality of frames of images based on the marker point position information, the image feature information and the IMU information.

In some embodiments of the present invention, the fifth determination sub-module may include:
a first forming unit is configured to, for the plurality of frames of images, form two frames of images whose inter-frame relative position satisfies a preset condition into a matched image pair;
a first matching unit is configured to, for the matched image pair, perform image feature matching based on the corresponding image feature information to obtain corresponding first matched feature point pairs;
a first determination unit is configured to, for the matched image pair, when the number of corresponding first matched feature point pairs is greater than a third preset threshold, determine a motion direction between two frames of images in the matched image pair based on the corresponding IMU information, and determine corresponding second matched feature point pairs based on the motion direction, and when the number of second matched feature point pairs is greater than a fourth preset threshold, determine a corresponding fundamental matrix based on the second matched feature point pairs, and determine a corresponding matched marker point pair based on the corresponding fundamental matrix, the corresponding second matched feature point pairs, and the corresponding marker point position information.

In some embodiment of the present invention, the first determination unit is configured to determine corresponding initial marker point pairs based on the second matching feature point pair and the marker point position information when determining the corresponding matched marker point pair based on the corresponding fundamental matrix, second matched feature point pairs and marker point position information, and if a product of position information of an initial marker point pair and the fundamental matrix is less than or equal to a second preset threshold, determine that the initial marker point pair is a matched marker point pair.

In some embodiments of the present invention, the fifth determination sub-module may further include:
a second determination unit is configured to, for the matched image pair, when the number of the first matched feature point pairs is less than or equal to the third preset threshold, a motion direction between two frames of images in the matched image pair is determined based on the corresponding IMU information, and the corresponding matched marker point pairs are determined based on the motion direction and the marker point position information.

In some embodiments of the present invention, the first reconstruction module 440 is configured to select an initial reconstruction image pair from among the matched image pairs;
perform triangulation processing based on the matched marker point pairs corresponding to the initial reconstruction image pair to obtain corresponding depth information;
it is determined that a preset reconstruction stop condition is not satisfied, determine a next reconstruction image pair and perform reconstruction processing on the next reconstruction image pair, until the preset reconstruction stop condition is satisfied;
wherein a next reconstruction image pair is determined and reconstruction processing is performed on the next reconstruction image pair, includes: adjacent images corresponding to a previous reconstruction image pair and a next reconstruction image pair including the adjacent images are determined, wherein the adjacent images and the previous reconstruction image pair have the largest number of co-visible marker points; poses corresponding to the adjacent images are determined based on depth information of the co-visible marker points and position information of the co-visible marker points in the adjacent images; and triangulation processing is performed based on the matched marker point pairs corresponding to the next reconstruction image pair to obtain corresponding depth information.

In some still other embodiments of the present invention, the apparatus further includes:
an optimization module is configured to optimize the depth information, the poses, and camera intrinsic parameters.

The apparatus provided in this embodiment can execute the method according to any one of the foregoing embodiments, and has similar execution manners and beneficial effects, which are not described herein again.

The embodiments of the present invention further provide an electronic device, including a memory storing a computer program; and a processor, configured to execute the computer program which, when executed by the processor, may implement the method according to any one of the embodiments.

Fig. 5 is a schematic structural diagram of an electronic device according to embodiments of the present invention. Referring specifically to Fig. 5 below, which shows a schematic structural diagram of an electronic device 500 suitable for implementing the embodiments of the present invention. The electronic device 500 in the embodiments of the present invention may include, but is not limited to, a mobile terminal such as a mobile phone, a notebook computer, a digital broadcast receiver, a Personal Digital Assistant (PDA), a tablet computer (PAD), a Portable Multimedia Player (PMP), and an in-vehicle terminal such as an in-vehicle navigation terminal, and a fixed terminal such as a digital TV, and a desktop computer. The electronic device shown in Fig. 5 is only an example, and should not limit the functions and use scopes of the embodiments of the present invention.

As shown in Fig. 5, the electronic device 500 may include a processing apparatus 501 (e.g., a central processing unit, a graphics processing unit, etc.), which can perform various suitable actions and processes in accordance with a program stored in a Read-Only Memory (ROM) 502 or a program loaded from a storage apparatus 508 into a Random Access Memory (RAM) 503. In the RAM 503, various programs and data necessary for the operation of the electronic device 500 are also stored. The processing apparatus 501, the ROM 502, and the RAM 503 are connected to each other via a bus 504. An Input/Output (I/O) interface 505 is also connected to the bus 504.

In general, the following apparatuses may be connected to the I/O interface 505: an input device 506 including, for example, a touch screen, a touch pad, a keyboard, a mouse, a camera, a microphone, an accelerometer, a gyroscope, etc.; an output device 507 including, for example, a Liquid Crystal Display (LCD), a speaker, a vibrator, etc.; a storage apparatus 508 including, for example, a magnetic tape, a hard disk, etc.; and a communication apparatus 509. The communication apparatus 509 may allow for wired or wireless communications between the electronic device 500 and other devices to exchange data. While Fig. 5 illustrates the electronic device 500 with a variety of apparatuses, it should be understood that not all of the illustrated apparatuses are required to be implemented or provided. It may alternatively be implemented with more or fewer apparatuses.

In particular, according to the embodiments of the present invention, the processes described above with reference to the flowcharts can be implemented as computer software programs. For example, the embodiments of the present invention include a computer program product including a computer program carried on a non-transitory computer-readable medium. The computer program includes program code for executing the method shown in the flowchart. In such embodiments, the computer program may be downloaded and installed from the network via the communication apparatus 509, or installed from the storage apparatus 508, or installed from the ROM 502. When the computer program is executed by the processing apparatus 501, the described functions defined in the method according to the embodiments of the present invention are executed.

It should be noted that the computer-readable medium as shown in the present invention may be a computer-readable signal medium or a non-volatile computer-readable storage medium, or any combination thereof. The non-volatile computer-readable storage medium may be, for example, but not limited to, an electronic, magnetic, optical, electromagnetic, infrared, or semiconductor system, apparatus, or device, or any suitable combination thereof. More examples of the non-volatile computer-readable storage medium may include, but not limited to: an electrical connection having at least one conductive wire, a portable computer disk, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination thereof. In the present invention, the non-volatile computer-readable storage medium may be any tangible medium that can contain or store a program, the program can be used by or used in connection with an instruction execution system, apparatus, or device. While in the present invention, the computer-readable signal medium may include a data signal carrying computer-readable program code which is propagated in a base-band or propagated as a part of a carrier wave. Such a propagated data signal may take a plurality of forms, including, but not limited to, electromagnetic signal, optical signal, or any suitable combination thereof. The computer-readable signal medium may also be any computer-readable medium other than a non-volatile computer-readable storage medium, and the computer-readable signal medium can send, propagate or transmit a program for use by an instruction execution system, apparatus, or device or for use in combination therewith. Program code included in the computer-readable medium may be transmitted via any suitable medium, including but not limited to electric wire, optical cable, Radio Frequency (RF), etc., or any suitable combination thereof.

In some embodiments, the client and the server may communicate using any currently known or future-developed network protocol, such as the Hyper Text Transfer Protocol (HTTP), and may be interconnected with digital data communications (e.g., a communication network) in any form or medium. Examples of communication networks include a local area network ("LAN"), a wide area network ("WAN"), an internetwork (e.g., the Internet), and a peer-to-peer network (e.g., an ad hoc peer-to-peer network), as well as any currently known or future-developed network.

The computer-readable medium above may be included in the electric device above, and the computer-readable medium may also exist separately and not be installed in the electric device.

The computer-readable medium bears at least one program. When the at least one program is executed by the electronic device, the electronic device is enabled to acquire a plurality of frames of images, wherein the images are obtained by a camera performing image acquisition on an object to be measured, the object having a surface provided with marker points; for the images, perform marker point recognition to obtain corresponding marker point position information, and perform image feature extraction to obtain corresponding image feature information; determine matched marker point pairs corresponding to matched image pairs in the plurality of frames of images based on the marker point position information and image feature information; and determine corresponding depth information and poses corresponding to the images based on the matched marker point pairs.

Computer program code for carrying out operations of the present invention may be written in at least one programming language, or combinations thereof, including but not limited to object-oriented programming language such as Java, Smalltalk, and C++, as well as conventional procedural programming languages such as the "C" language or similar programming language. The program code may execute entirely on a user computer, partly on the user computer, as a stand-alone software package, partly on the user computer and partly on a remote computer, or entirely on the remote computer or server. In a scenario involving a remote computer, the remote computer may be connected to the user computer by means of any type of network, including a local area network (LAN) or a wide area network (WAN), or may be connected to an external computer (for example, by means of the Internet using an Internet service provider).

The flowcharts and block diagrams in the figures illustrate the system architecture, functionality, and operation of possible implementations of systems, methods and computer program products according to various embodiments of the present invention. In this regard, each block in the flowcharts or block diagrams may represent a part of a module, a program segment, or code, and the part of a module, a program segment, or code includes at least one executable instruction for implementing a logic function. It should also be noted that in some alternative implementations, the functions labeled in the blocks may occur in sequences different from those labeled in the accompanying drawings. For example, two continuous blocks may, in fact, be executed substantially concurrently, or may sometimes be executed in an opposite order, depending on the functions involved. It will also be noted that each block in the block diagrams and/or flowcharts, and combinations of blocks in the block diagrams and/or flowcharts, can be implemented by special-purpose hardware-based systems that perform functions or operations, or implemented by combinations of purpose hardware and computer instructions.

The units involved in the embodiments of the present invention may be implemented by means of software, and also may be implemented by means of hardware. The names of the units do not constitute limitations to the units themselves in certain cases.

The functions described herein may be performed, at least in part, by at least one hardware logic component. For example, and without limitation, exemplary types of hardware logic components that may be used include: field programmable gate arrays (FPGAs), application integrated circuits (ASICs), application standard products (ASSPs), system on chip (SOC), complex programmable logic devices (CPLDs), etc.

In the context of the present invention, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but not limited to, an electronic, magnetic, optical, electromagnetic, infrared, or semiconductor system, apparatus or device, or any suitable combination thereof. More examples of the machine-readable storage medium may include an electrical connection having at least one conductive wire, a portable computer disk, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination thereof.

Embodiments of the present invention further provide a non-volatile computer-readable storage medium storing a computer program which, when executed by a processor, can implement the method in any one of the embodiments above. The execution manner and beneficial effects are similar and will not be described again here.

It should be noted that in the present text, relational terms such as first and second are only used to distinguish one entity or operation from another entity or operation, and do not necessarily require or imply any actual relationship or sequence between these entities or operations. Furthermore, the terms "include", "including", or any other variations thereof are intended to cover a non-exclusive inclusion, such that a process, a method, an article, or a device that includes a series of elements not only includes those elements, but also includes other elements that are not explicitly listed, or further includes inherent elements of the process, the method, the article, or the device. Without further limitation, an element defined by a sentence "including a ..." does not exclude other same elements existing in the process, the method, the article, or the device that includes the element.

The content above only relates to specific embodiments of the present invention, so that those skilled in the art can understand or implement the present invention. Various modifications to these embodiments will be apparent to a person skilled in the art. The general principles defined herein may be implemented in other embodiments without departing from the spirit or scope of the present invention. Accordingly, the present invention will not be limited to these embodiments shown herein, but needs to comply with the widest scope consistent with the principles and novel features disclosed herein.

### Industrial Applicability

The solution provided in the embodiments of the present invention can be applied to the field of computer technologies. In the embodiments of the present invention, a plurality of frames of images can be acquired, wherein the images are obtained by a camera performing image acquisition on an object to be measured, the object having a surface provided with marker points; for the images, marker point recognition can be performed to obtain corresponding marker point position information, and image feature extraction can be performed to obtain corresponding image feature information; matched marker point pairs corresponding to matched image pairs in the plurality of frames of images can be determined based on the marker point position information and image feature information; and corresponding depth information and poses corresponding to the images can be determined based on the matched marker point pairs. By means of the solution above, it is only necessary to use a camera to perform image acquisition on the object to be measured. Since the cost of the camera is generally relatively low, the cost can be reduced. In the process of marker point matching (or registration), outliers can be filtered by image feature information, such that the determined matched marker point pairs are more accurate, thereby helping to improve the accuracy of the depth information and the poses. Hence, the method for photogrammetry of the embodiments of the present invention exhibits the advantages of low cost and high accuracy.

## Claims

1. A method for photogrammetry, comprising:
acquiring a plurality of frames of images, wherein the images are obtained by a camera performing image acquisition on an object to be measured, the object having a surface provided with marker points;
for the images, performing marker point recognition to obtain corresponding marker point position information, and performing image feature extraction to obtain corresponding image feature information;
determining matched marker point pairs corresponding to matched image pairs in the plurality of frames of images, based on the marker point position information and the image feature information;
determining corresponding depth information and poses corresponding to the images based on the matched marker point pairs.

2. The method as claimed in claim 1, wherein determining matched marker point pairs corresponding to matched image pairs in the plurality of frames of images based on the marker point position information and the image feature information comprises:
determining at least one initial image pair based on the plurality of frames of images;
for the initial image pair, performing image feature matching based on the corresponding image feature information to obtain corresponding first matched feature point pairs, and determining a corresponding fundamental matrix based on the corresponding first matched feature point pairs;
for the initial image pair, determining corresponding matched marker point pairs based on the corresponding fundamental matrix, the corresponding first matched feature point pairs, and the corresponding marker point position information;
determining an initial image pair of which number of matched marker point pairs satisfies a first preset threshold, as a matched image pair.

3. The method as claimed in claim 2, wherein determining at least one initial image pair based on the plurality of frames of images comprises:
for the plurality of frames of images, forming one initial image pair from every two frames of images.

4. The method as claimed in claim 2, wherein determining corresponding matched marker point pairs based on the corresponding fundamental matrix, the corresponding first matched feature point pair, and the corresponding marker point position information comprises:
determining corresponding initial marker point pairs based on the first matched feature point pairs and the marker point position information;
if a product of position information of an initial marker point pair and the fundamental matrix is less than or equal to a second preset threshold, determining the initial marker point pair is a matched marker point pair.

5. The method as claimed in claim 2, wherein the method further comprising:
acquiring Inertial Measurement Unit (IMU) information between two adjacent frames of images;
wherein determining matched marker point pairs corresponding to matched image pairs in the plurality of frames of images based on the marker point position information and the image feature information comprises:
determining matched marker point pairs corresponding to the matched image pairs in the plurality of frames of images based on the marker point position information, the image feature information and the IMU information.

6. The method as claimed in claim 5, wherein determining matched marker point pairs corresponding to the matched image pairs in the plurality of frames of images based on the marker point position information, the image feature information and the IMU information comprises:
for the plurality of frames of images, forming a matched image pair from two frames of images whose relative inter-frame position satisfies a preset condition;
for the matched image pair, performing image feature matching based on the corresponding image feature information to obtain the corresponding first matched feature point pairs;
for the matched image pair, if the number of corresponding first matched feature point pairs is greater than a third preset threshold, determining a motion direction between two frames of images in the matched image pair based on the corresponding IMU information, and determining corresponding second matched feature point pairs based on the motion direction;
if the number of second matched feature point pairs is greater than a fourth preset threshold, determining a corresponding fundamental matrix based on the second matched feature point pairs, and determining corresponding matched marker point pairs based on the corresponding fundamental matrix, the corresponding second matched feature point pairs, and the corresponding marker point position information.

7. The method as claimed in claim 6, wherein determining corresponding matched marker point pairs based on the corresponding fundamental matrix, the corresponding second matched feature point pairs, and the corresponding marker point position information comprises:
determining corresponding initial marker point pairs based on the second matched feature point pairs and the marker point position information;
if a product of position information of an initial marker point pair and the fundamental matrix is less than or equal to a second preset threshold, determining the initial marker point pair is the matched marker point pair.

8. The method as claimed in claim 6, further comprising:
for the matched image pair, if the number of the first matched feature point pairs is less than or equal to the third preset threshold, determining a motion direction between two frames of images in the matched image pair based on the corresponding IMU information, and determining the corresponding matched marker point pairs based on the motion direction and the marker point position information.

9. The method as claimed in claim 1, wherein determining corresponding depth information and poses corresponding to the images based on the matched marker point pairs comprises:
selecting an initial reconstruction image pair from among the matched image pairs;
performing triangulation processing based on the matched marker point pairs corresponding to the initial reconstruction image pair to obtain corresponding depth information;
determining that a preset reconstruction stop condition is not satisfied, determining a next reconstruction image pair and performing reconstruction processing on the next reconstruction image pair, until the preset reconstruction stop condition is satisfied;
wherein determining a next reconstruction image pair and performing reconstruction processing on the next reconstruction image pair comprises:
determining adjacent images corresponding to a previous reconstruction image pair and a next reconstruction image pair comprising the adjacent images, wherein the adjacent images and the previous reconstruction image pair have the largest number of co-visible marker points;
determining poses corresponding to the adjacent images based on depth information of the co-visible marker points and position information of the co-visible marker points in the adjacent images; and performing triangulation processing based on the matched marker point pairs corresponding to the next reconstruction image pair to obtain corresponding depth information.

10. The method as claimed in claim 9, further comprising:
optimizing the depth information, the poses, and camera intrinsic parameters.

11. An apparatus for photogrammetry, comprising:
a first acquisition module, configured to acquire a plurality of frames of images, wherein the images are obtained by a camera performing image acquisition on an object to be measured, the object having a surface provided with marker points;
a first extraction module, configured to, for the images, perform marker point recognition to obtain corresponding marker point position information, and perform image feature extraction to obtain corresponding image feature information;
a first determination module, configured to determine matched image pairs in the plurality of frames of images and matched marker point pairs corresponding to the matched image pairs based on the marker point position information and the image feature information;
a first reconstruction module, configured to determine corresponding depth information and poses corresponding to the images based on the matched marker point pairs.

12. An electronic device, comprising:
a processor and a memory, wherein the memory stores a computer program, when the computer program is executed by the processor, the processor executes the method according to any one of claims 1-10.

13. A non-volatile computer-readable storage medium storing a computer program which, when executed by a processor, implements the method according to any one of claims 1-10.
